# EUROPEAN PATENT SPECIFICATION

(11) **EP 0 781 933 B1**
(45) Date of publication and mention of the grant of the patent: **01.08.2001**
(21) Application number: 96116401.9
(22) Date of filing: 14.10.1996
(51) Int. Cl.: F16D 3/78, F16D 3/70

(54) **A flexible coupling with an inner reinforcement**
Elastische Kupplung mit einem Innenverstärkungselement
Accouplement élastique avec un élément de renfort interne

(30) Priority: 29.11.1995 IT TO950953
(43) Date of publication of application: 02.07.1997
(73) Proprietor: C.O.R.A. S.r.l., 10080 Busano (TO) (IT)
(72) Inventor: Bartoli, Giovanni, 10080 Busano Canavese TO (IT)
(74) Representative: Lotti, Giorgio

(56) References cited:
- EP-A- 0 106 579
- FR-A- 2 410 172
- US-A- 2 101 078
- US-A- 4 525 231

## Description

### Field of the invention

The present invention falls within the field of flexible couplings for propeller shafts. More particularly, the invention relates to a flexible coupling with an inner reinforcement of plastic material.

### Background of the invention

There are known various kinds of propeller shaft flexible couplings composed of a thick disc of elastic material that allows the driving forces to be transmitted from one shaft to the other accommodating their misalignment. Generally, the elastic disc is of a suitable mix and forms a single block with a plurality of cylindrical steel sleeves crossing the disc axially. The sleeves are equally spaced around a central bore through which one of the two shafts is inserted. Each sleeve contains a respective rigid inner sleeve through which a bolt is inserted for reciprocally fixing the two shafts.

In order that the elastic disc can withstand and transmit torsional stresses it undergoes during operation, a reinforcement must be provided in side the rubber. The reinforcement must also have elastic properties; it is designed for mainly undergoing tractive stress as it resists tangential or circumferential stresses which occur in operation.

There are known flexible couplings of the above discussed type wherein the sleeves are securely retained by a rope o wire reinforcement with metal reinforcing discs. In other cases, the reinforcement is attained by providing an 8-shaped double fibre braiding around the circle of sleeves. In still other solutions, there are used one or more rubberised threads which are braided alternately following a regular repetitive pattern winding the sleeves partially or completely and finally vulcanising the so formed unit. Examples of this prior art are disclosed in patent publications DE-A-29 45 469, EP-A-0 454 732, DD-A-227 207, DE-A-30 25 148.

While the overall performances of the above discussed flexible couplings can be considered as satisfactory, the production thereof involves an inconvenience in that the braiding requires considerable time and so raises the costs of the finished product.

Another inconvenience encountered in manufacturing these kinds of joints lies in that a special apparatus is required for provisionally holding the sleeves in position during the formation of the braiding. Obviously, the apparatus has also to be rapid to be able to form the braiding in reasonable time. Once the sleeves are secured to each other, the so formed unit has to be fitted in a mould to be vulcanised or injection moulded. These working operations imply considerable implementation and operation expenses for the braiding machines. Also these expenses increase the product costs.

A solution to the aforementioned drawbacks can be found into the European Patent Application No. 0 106 579 which discloses a flexible coupling comprising an outer rubber body and an inner reinforcement, which is buried in the rubber body and is provided with a moulded cruciform spider of a plastic material having a plurality of circular apertures, and a number of axial metal sleeves for fixing to one of two shafts to be jointed, said sleeves being disposed around a central circular apertures adapted for accommodating one of said two shafts.

Unfortunately this solution presents some drawbacks due to the fact that the plastic material of the cruciform spider is made hardened around the sleeves, so that the former and the latter make a single rigid body able to transmit all the stress between the two shafts.

### Summary of the invention

It is an object of the present invention to provide a flexible coupling of low cost having a reinforcement capable of accomplishing several functions. It is desired to provide a structural element which, besides optimising the distribution of stresses within the flexible coupling keeping the steel sleeves secured together, has a high surface/volume ratio. The shape of the reinforcement should reach substantially every part of the rubber body so as to provide a binding effect keeping the rubber compact over time and preventing the rubber from disgregating and detaching from parts which it should adhere to.

It is another object of the present invention to provide a reinforcement which is useful also while constructing the coupling when the metal sleeves are fitted in the mould before the injection of rubber. The reinforcement should also act as a positioning element for fitting the sleeves at their locations, so as to speed up the manufacturing process.

It is a further object of the invention to provide a flexible coupling which allows to dispense from utilising conventional costly systems for forming a wire or thread reinforcement.

In accordance with the invention as claimed, these objects are accomplished by the provision of a flexible coupling for propeller shafts, the coupling comprises: a rubber body of substantially disc-like shape forming a single block with a plurality of axial sleeves for fixing to one of two shafts to be jointed, said sleeves being disposed around a central bore adapted for accommodating one of said two shafts; and a reinforcement buried in the body and consisting of a moulded body of a plastic material resistant to tensile stress and being provided with a radial plate portion and with a plurality of circular apertures made through the said plate portion adapted for accommodating said sleeves and said shaft, respectively; the coupling is characterised by the fact that the coupling comprises for each sleeve an inner sleeve which forms a respective gap with the respective sleeve filled by the said rubber body; the moulded body further comprising a plurality of axial positioning pins extending from the opposite faces of said plate portion.

### Brief description of the drawings

In order that the present invention may be well understood there will now be described a preferred embodiment thereof, given by way of example, reference being made to the accompanying drawings, in which:
- FIG. 1: is a schematic axial front view of a preferred embodiment of a flexible coupling according to the present invention;
- FIG. 2: is a cross-sectional view taken along line II-II of FIG. 1;
- FIG. 3: is a front axial view of the reinforcement of the flexible joint of FIG. 1; and
- FIG. 4: is a cross-sectional view taken along line II-II of FIG. 1.

### Detailed description of the invention

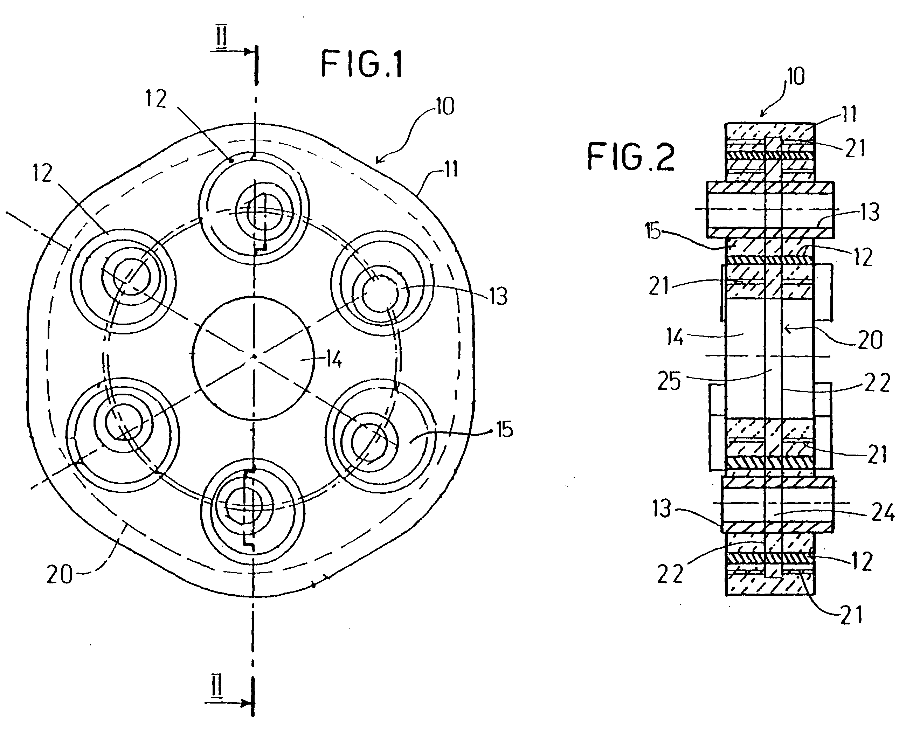

With reference initially to FIGS. 1 and 2, numeral 10 designates overall a flexible coupling comprising a rubber elastic body 11 of substantially disc-like shape forming a single block with a plurality of cylindrical steel sleeves 12 crossing the disc-like body axially. The elastic body 11, as well as the sleeves 12 with relevant rigid inner sleeves 13 are of conventional kind, and therefore are not described in detail hereinafter. The sleeves are radially and angularly equally spaced around a central bore 14 in which there is inserted one of the two shafts (not shown) to be jointed. The rubber fills the space between the sleeves 12 and also the gaps 15 between each sleeve 12 and its corresponding inner sleeve 13 which is usually at an eccentric location.

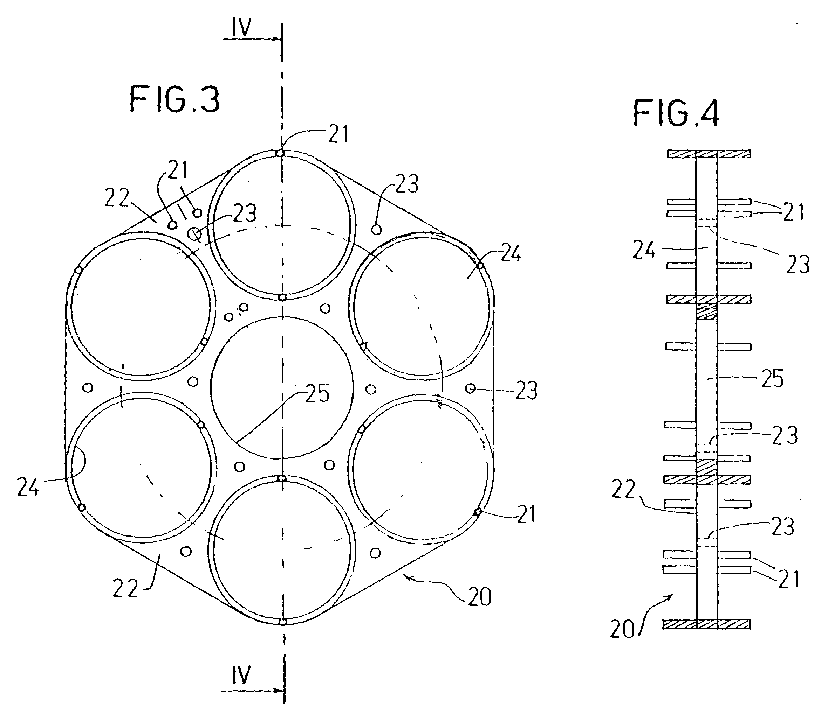

With reference also to FIGS. 3 and 4, an inner reinforcement 20 is completely covered with the rubber of the elastic body 11. In accordance with the present invention, the reinforcement 20 is obtained as a single moulded plastic body, preferably nylon 6.6. The reinforcement 20 consists of a flat radial plate portion 22 having a plurality of peripheral circular apertures 24 adapted for receiving the sleeves 12 around a central circular aperture 25 for accommodating one of the two shafts. Extending perpendicular from the opposite faces of the radial plate portion 22 is a plurality of axial pins 21 distributed in a substantially uniform manner. As is apparent from the comparision of the axial views of FIGS. 1 and 3, the contour of radial plate portion 22 copies that of the elastic body 11, but advantageously has a somewhat smaller radial dimension such that it can be covered with rubber also on its side not to leave an axial discontinuity in the rubber at the peripheral part of the flexible coupling.

The length of the pins 21 is chosen such that upon positioning the reinforcement in the mould, the radial plate portion 22 is exactly in the middle of the axial thickness of the coupling. In order to optimise the surface/volume ratio between the reinforcement and the rubber, the thickness of the radial plate portion is comparable to, and preferably slightly less, than the length of the pins, i.e. about 1/3÷1/4 of the axial thickness of the disc 11.

To increase the adherence surface between the rubber and the reinforcement, and to let the liquid rubber during vulcanisation rapidly reach and fill al the interstices before it cools, a plurality of uniformly distributed through holes 23 of small diameter are obtained in the radial plate portion 22. Preferably, the diameter of the holes 23 is of 1÷2 mm, i.e. comparable to that of pins 21.

As shown in FIG. 3, in the preferred embodiment the voids prevail on the solid parts. The minimum thickness between two adjacent apertures 24 is comparable to the axial thickness of the plate portion. As a result, the presence of the reinforcement of this invention in the rubber does not adversely affect the overall compressibility required for the flexible coupling.

As it can be appreciated, the reinforcement 20 can be easily and quickly positioned within the moulding. The two faces of reinforcement are equal, so there is no possibility of error in this operation. The outer sleeves 12 are inserted in the circular apertures 24 and correctly held in such an arrangement during moulding. Manufacturing of the flexible coupling is therefore accelerated and is less expensive with respect to the past due to the reinforcement 20 that can advantageously be obtained through moulding.

The flexible joint obtained possesses enhanced torsional resistance. From the tests carried out so far, it has shown to be long lasting and capable of remaining integer for a long time.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example. The scope of the invention is to be limited only by the appended claims.

## Claims

1. A flexible coupling for propeller shafts, the coupling comprising:
a rubber body of substantially disc-like shape forming a single block with a plurality of axial sleeves (12) for fixing to one of two shafts to be jointed, said sleeves (12) being disposed around a central bore (14) adapted for accommodating one of said two shafts; and
a reinforcement (20) buried in the body and consisting of a moulded body of a plastic material resistant to tensile stress and being provided with a radial plate portion (22) and with a plurality of circular apertures (24, 25) made through the said plate portion (22) adapted for accommodating said sleeves (12) and said shaft, respectively;
the coupling is characterised by the fact that the coupling comprises for each sleeve (12) an inner sleeve (13) which forms a respective gap (15) with the respective sleeve (12) filled by the said rubber body; the moulded body further comprising a plurality of axial positioning pins (21) extending from the opposite faces of said plate portion (22).

2. A flexible coupling according to claim 1, wherein a plurality of through holes (23) is further obtained in the radial plate portion (22), said through holes being so distributed as to facilitate the flow of the fluid rubber material from one side to the other of the radial plate portion while forming the disc-like body (11).

3. A flexible coupling according to claim 1, wherein said projections (21) have axial length adapted for keeping said radial plate portion (22) at a position within the mould for forming said disc-like rubber body (11), such that said plate portion is substantially in the middle of the axial thickness of the flexible coupling.

4. A flexible coupling according to claim 2, wherein said holes (23) are of small diameter.

5. A flexible coupling according to claim 1, wherein said radial plate portion (22) has an axial thickness ranging between 1/3 and 1/4 of the axial thickness of the disclike body (11).

6. A flexible coupling according to claim 1, wherein said plate portion (22) has a contour copying that of the disc-like body (11) but comprised within this so as to allow also the sides of said portion to be covered with rubber.

7. A flexible coupling according to claim 1, wherein said reinforcement (20) is moulded in a single piece of nylon 6.6.

## Patentansprüche

1. Flexible Kupplung für Gelenkwellen, wobei die Kupplung folgendes umfaßt:
einen Gummikörper mit einer im wesentlichen scheibenförmigen Gestalt, der einen einzigen Block mit einer vielzahl von axialen Muffen (12) zur Befestigung an eine der zwei Wellen, die miteinander verbunden werden sollen, bildet, wobei die Muffen (12) um eine mittlere Bohrung (14) angeordnet sind, die dazu angepaßt ist, eine der zwei Wellen aufzunehmen; und
eine Verstärkung (20), die im Körper eingeschlossen ist und einen geformten Körper aus einem Plastikmaterial umfaßt, der gegen Zugspannung widerstandsfähig ist und mit einem radialen Plattenteil (22) und mit einer Vielzahl von kreisförmigen Öffnungen (24, 25) versehen ist, die durch den Plattenteil (22) angebracht sind, die dazu angepaßt sind, die Muffen (12) beziehungsweise die Welle aufzunehmen;
die Kupplung ist dadurch gekennzeichnet, daß die Kupplung für jede Muffe (12) eine innere Muffe (13) umfaßt, die eine entsprechende Lücke (15) mit der entsprechenden Muffe (12), aufweist, die mit dem Gummikörper gefüllt ist; wobei der geformte Körper weiter eine Vielzahl von axialen Anbringungsstiften (21) umfaßt, die sich von den entgegengesetzten Seiten des Plattenteils (22) erstrecken.

2. Flexible Kupplung nach Anspruch 1, worin im radialen Plattenteil (22) weiter eine Vielzahl von Durchgangslöchern (23) angebracht ist, wobei die Durchgangslöcher so verteilt sind, daß sie den Fluß des flüssigen Gummimaterials von einer Seite des radialen Plattenteils zur anderen ermöglichen, während der scheibenähnliche Körper gebildet (11) wird.

3. Flexible Kupplung nach Anspruch 1, worin die Vorsprünge (21) eine axiale Länge aufweisen, die dazu angepaßt ist, um den radialen Plattenteil (22) in einer Lage innerhalb der Form zur Bildung des scheibenförmigen Gummikörpers (11) zu halten, so daß sich der Plattenteil im wesentlichen in der Mitte der axialen Stärke der flexiblen Kupplung befindet.

4. Flexible Kupplung nach Anspruch 2, worin die Löcher (23) einen kleinen Durchmesser aufweisen.

5. Flexible Kupplung nach Anspruch 1, worin der radiale Plattenteil (22) eine axiale Stärke aufweist, die zwischen 1/3 und 1/4 der axialen Stärke des scheibenförmigen Körpers (11) beträgt.

6. Flexible Kupplung nach Anspruch 1, worin der Plattenteil (22) einen Umriß aufweist, der denjenigen des scheibenförmigen Körpers (11) kopiert aber darin eingeschlossen ist, um es zu ermöglichen, daß auch die Seiten des Teils mit Gummi bedeckt werden.

7. Flexible Kupplung nach Anspruch 1, worin die Verstärkung (20) aus einem einzigen Stück Nylon 6.6 geformt ist.

## Revendications

1. Accouplement élastique pour arbres de transmission, ledit accouplement comportant :
un corps en caoutchouc, ayant sensiblement une forme de disque, formant un seul bloc avec une pluralité de douilles axiales (12) en vue de la fixation à l'un de deux arbres à raccorder, lesdites douilles (12) étant disposées autour d'un perçage central (14) adapté pour recevoir l'un desdits deux arbres ; et
un élément de renfort (20) noyé dans le corps et constitué par un corps moulé fait d'une matière plastique résistante aux contraintes de traction, et étant muni d'une portion de plaque radiale (22) et d'une pluralité d'ouvertures circulaires (24,25) réalisées au travers de ladite portion de plaque (22) pour recevoir respectivement lesdites douilles (12) et ledit arbre ;
lequel accouplement est caractérisé en ce qu'il comporte, pour chaque douille (12), une douille intérieure (13) définissant avec la douille (12) associée un espace intermédiaire respectif (15) qui est occupé par ledit corps en caoutchouc ; ledit corps moulé comportant en outre une pluralité de broches de positionnement axial (21) qui s'étendent à partir des faces opposées de ladite portion de plaque (22).

2. Accouplement élastique selon la revendication 1, dans lequel il est en outre prévu une pluralité de perçages traversants (23) dans la portion de plaque (22), lesdits perçages traversants étant distribués de façon à faciliter l'écoulement de la matière de caoutchouc fluide d'un côté à l'autre de la portion de plaque radiale (22) lors du formage du corps en forme de disque (11).

3. Accouplement élastique selon la revendication 1, dans lequel lesdites broches en saillie (21) présentent une longueur axiale adaptée pour assurer un maintien en position de ladite portion de plaque radiale (22) à l'intérieur du moule, pour le formage dudit corps en forme de disque (11) en caoutchouc, qui soit tel que ladite portion de plaque se trouve sensiblement à mi-épaisseur axiale de l'accouplement flexible.

4. Accouplement élastique selon la revendication 2, dans lequel lesdits perçages (23) sont de petit diamètre.

5. Accouplement élastique selon la revendication 1, dans lequel ladite portion de plaque radiale (22) présente une épaisseur axiale se situant entre 1/3 et 1/4 de l'épaisseur axiale du corps en forme de disque (11).

6. Accouplement élastique selon la revendication 1, dans lequel ladite portion de plaque (22) présente un contour périphérique reprenant celui du corps en forme de disque (11), mais en étant inclus à l'intérieur de celui-ci de façon à permettre aussi le recouvrement des bords de ladite portion par le caoutchouc.

7. Accouplement élastique selon la revendication 1, dans lequel ledit élément de renfort (20) est moulé d'une seule pièce en nylon 6.6.
